Europäisches Patentamt

European Patent Office

Office européen des brevets

(11) Publication number: **0 351 961**
**A2**

# EUROPEAN PATENT APPLICATION

(21) Application number: **89306361.0**

(22) Date of filing: **23.06.89**

(51) Int. Cl.⁴: **G06F 13/40**

(30) Priority: **22.07.88 US 224088**

(43) Date of publication of application:
**24.01.90 Bulletin 90/04**

(84) Designated Contracting States:
**DE FR GB**

(71) Applicant: **International Business Machines Corporation**
**Old Orchard Road**
**Armonk, N.Y. 10504(US)**

(72) Inventor: **Coorg, Bashem Sampath**
**2803 Quail Run**
**Round Rock Texas 78681(US)**
Inventor: **Schwartz, Robert Christian**
**206 Esparada Drive**
**Georgetown Texas 78628(US)**

(74) Representative: **Grant, Iain Murray**
**IBM United Kingdom Intellectual Property**
**Department Hursley Park**
**Winchester Hampshire, SO21 2JN(GB)**

(54) **Automatic reconfiguring apparatus.**

(57) A functional unit, coupled to an information processing system, generates configuration interface signals which are decoded to facilitate the selection of one of a plurality of system devices. The selected one of the system devices then provide the proper electrical signals to the coupled functional unit. Many of the electrical signals are common to a plurality of functional units. However, these signals may be assigned to different pins on a system connector for the various functional units. The present invention allows these electrical signals to be dynamically moved to different pins and the use of a standard connector for all functional units with the coupled functional unit using only those signals required. Thus, a single connector can be used for all of the functional units which minimises the use of valuable real estate on a system board.

FIG. 2

# AUTOMATIC RECONFIGURING APPARATUS

The present invention relates to automatic reconfiguring apparatus in and for an information processing system to provide for the self configuring of functional units to the information processing system.

In a typical personal computer system, different peripheral devices are offered either as options or different models. Most of these devices are designed to be physically mounted in the same location and may require a slightly different logical interface. The result is several logically different connectors mounted in the same area on a system board of the personal computer system.

The various connectors not only take more system board space but complicate the wiring of the system board. This results in higher system board costs and added time to the product schedule. In small computer systems, such as a lap top or portable, this problem becomes a big concern. The system board must be made as small as possible as the market demands are for a very inexpensive product on a very fast schedule.

Moreover, the list of peripheral devices which are available for use in these computer systems is growing rapidly. Flexible disk drives, such as a 5 1/4" and 3 1/2", hard files of varying capacities and CD ROMs are available for use today in these computer system. The logical interfaces for all of these peripheral are very similar but are different enough to require different connectors.

Consequently, there is a need for an apparatus which facilitates the coupling of various peripheral devices without using valuable space on the system board.

The present invention provides apparatus for automatically configuring an information processing system which incorporates a plurality of system devices, to accommodate the attachment of one of a plurality of different pluggable functional units into the system, the apparatus comprising:
detecting means for detecting from the nature of the plugging which one of the plurality of functional units is currently attached; and
coupling means responsive thereto for enabling selective coupling of electrical signals generated by a selected one of the plurality of system devices to that functional unit.

The apparatus may further include means for excluding electrical signals generated by the remaining ones of the plurality of system devices from becoming coupled to that functional unit and the plurality of functional units may include input-output devices and/or memory units and/or logic circuits.

The plurality of system devices may be mounted on a system board together with the detecting means and the coupling means, and the excluding means, if present, and the coupling means may comprise a commonly compatible part connector, mounted on the system board, able to mate with the other part connector of any of the functional units and establish plural contact to contact electrical connections thereby, a fixed sub-set of the contacts of the commonly compatible part connector being coupled to the detecting means and used by it to determine the type of functional unit currently plugged thereinto. The system units can be each connected by conductive paths to a respective contacts of the commonly compatible part connector, the detecting means enabling one only thereof and disabling the remainder in response to signals derived from the fixed sub-set of contacts or by conductive paths to the detecting means, which includes respective cross-over switches coupled to respective conductive paths and to respective contacts of the commonly compatible part connector, the detecting means enabling one only thereof and disabling the remainder in response to signals derived from the fixed sub-set of contacts

The present invention also provides a system incorporating such apparatus.

In embodiments of the invention disclosed hereinafter, a plurality of functional units may be coupled to the information processing system using a single system connector. One of the plurality of functional units coupled to the system, generates configuration interface signals which are decoded to facilitate the selection of one of a plurality of system devices. The selected one of the system devices then provides the proper electrical signals to the coupled functional unit. Many of the electrical signals are common to all of the functional units. However, these signals may be assigned to different pins on the system connector. The present invention allows these electrical signals to be dynamically moved to different pins. Additionally, the present invention allows the use of a standard connector for all functional units with the coupled functional unit using only those signals required. Thus, a single connector can be used for all of the functional units which minimises the use of valuable real estate on a system board.

The present invention will be described further by way of example with reference to embodiments thereof as illustrated in the accompanying drawings, in which:

FIG. 1 is a block diagram of a portion of a information processing system;

FIG. 2 is a block diagram of a portion of an alternative embodiment of the present invention;

and

FIG. 3 is a block diagram of a connection selection logic of the embodiment of Fig. 2.

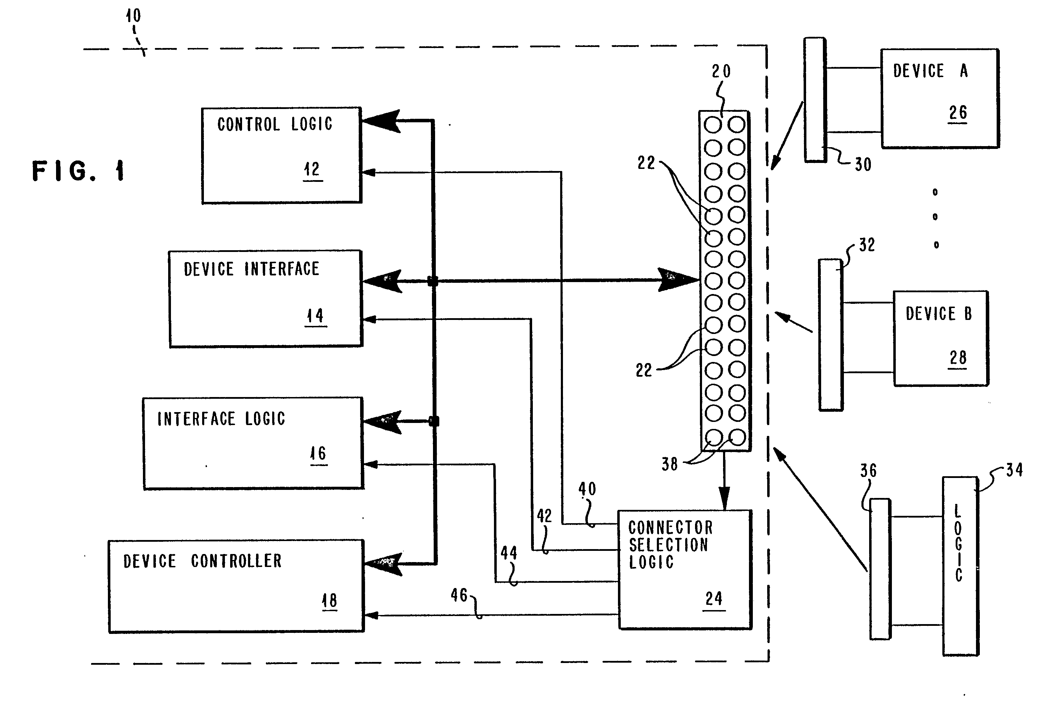

As shown in Fig. 1, an information processing system includes a system board 10 and a plurality of system devices and circuits such as a control logic circuit 12, a device interface 14, an interface logic circuit 16, and a device controller 18. A system board connector 20, or, rather, a commonly compatible part connector, having a plurality of pins 22, is integrally formed with the system board 10. A connector selection logic circuit 24 is electrically coupled to predetermined pins of the connector 20 and three-state inputs of the respective system devices 12, 14, 16 and 18.

The control logic circuit 12 enables the coupling of a device controller (not shown), which may be included in each of a plurality of functional units such as external devices 26 and 28, to the information processing system. The control logic circuit 12 facilitates the application of electrical signals required by the device controller to be coupled to the system.

Alternatively, device controllers for the external devices 26 and 28 may be included on the system board 10. The device interface circuit 14 then enables the coupling of the external devices 26 and 28 to the device controllers included in the information processing system. The external devices 26 and 28 may be input-output devices such as a flexible disk drive, a hard disk drive or an optical disk drive. Additionally, devices 26 and 28 are coupled to the information processing system through device connectors 30 and 32, respectively.

The device interface circuit 14 provides the proper electrical signals for the external device 26 and 28. The electrical connections for each of the input-output devices noted above may be different. Thus, it is important to provide the proper signals through the system board connector 20, the respective device connector 30 or 32 to the external device 26 or 28, respectively.

The interface logic circuit 16 facilitates the coupling of an external logic circuit 34 as a functional unit to the information processing system. The external logic circuit 34, which is coupled to the system through a device connector 36, may be (1) a memory circuit or (2) an adapter to which an additional logic circuit or device may be connected. The interface logic circuit 16 provides the electrical signals which are required to establish communication between the external adapter or memory circuit and the information processing system.

The device controller 18 enables the coupling of a special interface to the information processing system. The special interface may be a small computer system interface (SCSI). The small computer system interface is a universal interface for functional units such as hard disk drives, optical disk drives, modems and local area networks. External devices 26 and/or 28 may be SCSI type devices. If external devices 26 or 28 are SCSI type devices, then the external device will be coupled to the system through the device controller 18.

. The connector selection logic circuit 24 is a 1 of n decoder which enables the activation of the appropriate one of the plurality of system devices 12, 14, 16, and 18 to be coupled to the appropriate functional unit 26, 28 and 34 connected through the system board connector 20 to the information processing system. The size of the decoder is proportional to the number of functional units which require a different electrical signal connection to the information processing system.

Connectors 20, 30, 32 and 36 are all designed to have spare or unused pins. These spare or unused pins are then dedicated to be used as configuration pins 38. The number of pins dedicated as configuration pins 38 is proportional to the number of different types of functional units which may be coupled to the information processing system and which require different electrical signal connection or the coupling of different system devices. The configuration pins 38 are the same pins for each of the functional units, however, the electrical signals present on the remaining pins 22 may be different for each type of functional unit. For purposes of illustration and not limitation, two configuration pins 38 enables the coupling of four types of functional units which require different electrical connections or the coupling of different system devices.

In operation, when one of the functional units 26, 28, or 34 are connected to the system board 20, the connected functional unit provides predefined configuration interface signals on the configuration pins 38. The configuration interface signals are different for each type of functional unit requiring the coupling of a different one of the plurality of the system devices 12, 14, 16 and 18. The connector selection logic circuit 24 then decodes the configuration interface signals and transmits an enabling signal over lines 40, 42, 44, or 46 to the tri-state input of the proper system device 12, 14, 16 or 18 associated with the connected functional unit. Simultaneously, the connector selection logic circuit 24 disables the remaining system devices to prevent the system devices from providing any electrical signals to the functional unit coupled to the connector 20. Subsequently, if a functional unit is coupled to the connector 20 which requires a different system device, the connector selection logic circuit 24 decodes the configuration interface signals generated thereby and enables the information processing system to reconfigure itself and coupled the appropriate system device to the connector 20.

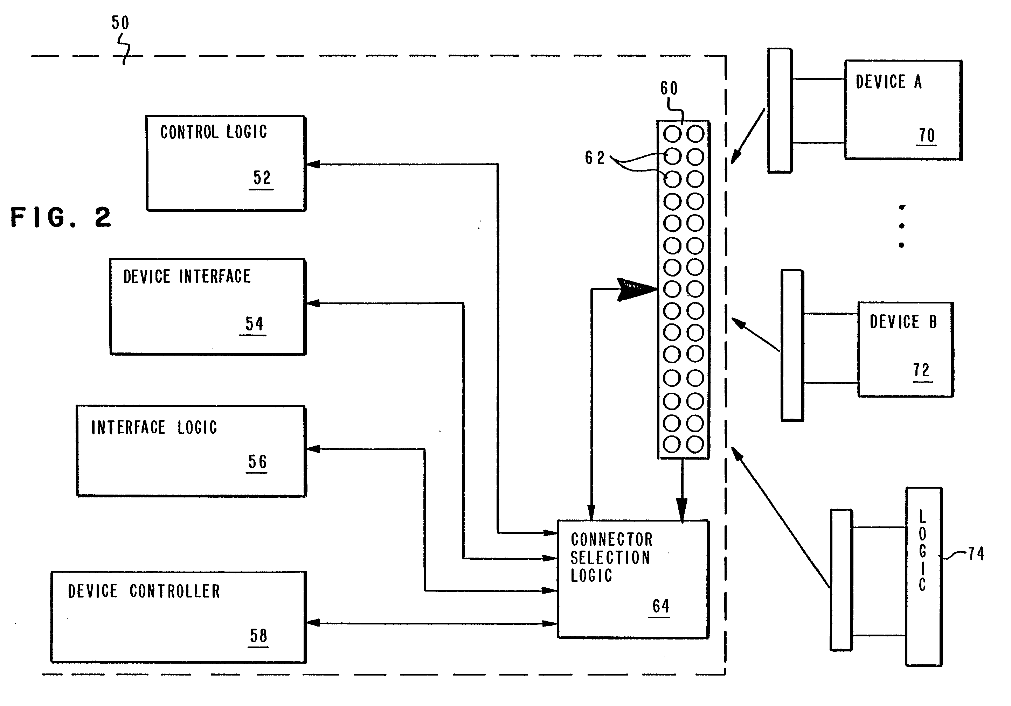

Fig. 2 shows an alternative arrangement in which the information processing system includes a plurality of devices and circuits such as a control logic circuit 52, a device interface 54, an interface logic circuit 56, and a device controller 58. A system board connector 60, having a plurality of pins 62, is integrally formed with a system board 50. A connector selection logic circuit 64 is electrically coupled to predetermined pins of the connector 60 and tri-state inputs of the respective system devices 52, 54, 56 and 58.

The control logic circuit 52, the device interface 54, the interface logic circuit 56 and the device controller 58 perform the same function as the control logic circuit 12, the device interface 14, the interface logic circuit 16 and the device controller 18, respectively, shown in Fig. 1.

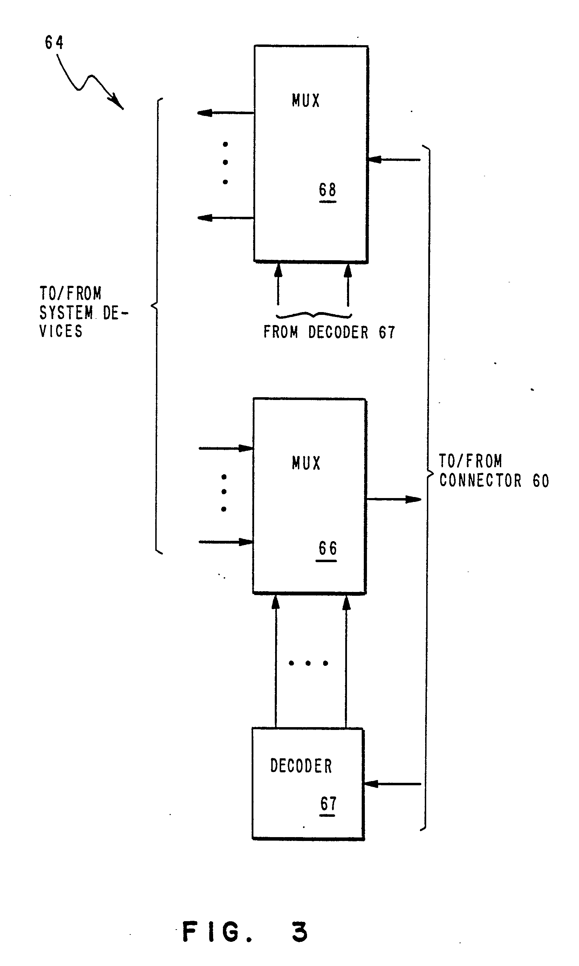

Referring to Fig. 3, the connector selection logic circuit 64 includes a 1 of n decoder 67 which controls a first multiplexor 66 and a second multiplexor 68. The first multiplexor 66 facilitates the flow of electrical signals from a selected one of the system devices 52, 54, 56 and 58 through the system board connector 60 to an associated one of a plurality of functional units 70, 72 and 74. The second multiplexor 68 facilitates the flow of electrical signals from one of the plurality of functional units 70, 72 and 74 through the connector 60 to one of the system devices 52, 54, 56 and 58 of the information processing system. In essence, the decoder 67 and the multiplexors 66 and 68 enable the activation of the appropriate one of the plurality of system devices 52, 54, 56, and 58 to coupled the appropriate functional unit 70, 72 and 74 connected through the system board connector 60 to the information processing system.

The operation of the alternative arrangement is exactly the same as that noted above for the first.

In summary, a plurality of functional units may be coupled to the information processing system using a single system connector. The functional unit coupled to the information processing system, generates configuration interface signals which are decoded to facilitate the selection of one of a plurality of system devices. The system devices then provide the proper electrical signals to the coupled functional unit. Many of the electrical signals are common to all of the functional units. However, these signals may be assigned to different pins on the system connector. The present invention allows these electrical signals to be dynamically moved to different pins. Additionally, the present invention allows the use of a standard connector for all functional units with the coupled functional unit using only those signals required. Thus, a single connector can be used for all of the functional units which minimises the use of valuable real estate on the system board.

While the invention has been particularly shown and described with reference to a preferred embodiment, it will be understood by those skilled in the art that various changes in form and detail may be made without departing from the scope of the appended claims. For example, more than one system board connector may be used and the number of system devices and functional units may be increased. Further, the connector may be a socket, or a mixed pin and socket part connector.

## Claims

1. Apparatus for automatically configuring an information processing system which incorporates a plurality of system devices, to accommodate the attachment of one of a plurality of different pluggable functional units into the system, the apparatus comprising:
detecting means for detecting from the nature of the plugging which one of the plurality of functional units is currently attached; and
coupling means responsive thereto for enabling selective coupling of electrical signals generated by a selected one of the plurality of system devices to that functional unit.

2. Apparatus as claimed in claim 1 further including means for excluding electrical signals generated by the remaining ones of the plurality of system devices from becoming coupled to that functional unit.

3. Apparatus as claimed in claim 2, wherein the plurality of functional units include input-cutput devices and/or memory units and/or logic circuits.

4. Apparatus as claimed in any preceding claim, wherein the plurality of system devices are mounted on a system board together with the detecting means and the coupling means, and the excluding means, if present.

5. Apparatus as claimed in claim 4, wherein coupling means comprises a commonly compatible part connector, mounted on the system board, able to mate with the other part connector of any of the functional units and establish plural contact to contact electrical connections thereby, a fixed sub-set of the contacts of the commonly compatible part connector being coupled to the detecting means and used by it to determine the type of functional unit currently plugged thereinto.

6. Apparatus as claimed in claim 5, wherein the system units are each connected by conductive paths to a respective contacts of the commonly compatible part connector, the detecting means enabling one only thereof and disabling the remainder in response to signals derived from the fixed sub-set of contacts

7. Apparatus as claimed in claim 5, wherein the system units are each connected by conductive paths to the detecting means, which includes respective cross-over switches coupled to respective conductive paths and to respective contacts of the commonly compatible part connector, the detecting means enabling one only thereof and disabling the remainder in response to signals derived from the fixed sub-set of contacts

8. A data processing system including apparatus as claimed in any preceding claim.

# FIG. 1

CONTROL LOGIC

12

DEVICE INTERFACE

14

INTERFACE LOGIC

16

DEVICE CONTROLLER

18

CONNECTOR SELECTION LOGIC

24

DEVICE A

26

30

DEVICE B

28

32

LOGIC

34

36

20

22

22

38

40

42

44

46

10

EP 0 351 961 A2

FIG. 2

CONTROL LOGIC

52

DEVICE INTERFACE

54

INTERFACE LOGIC

56

DEVICE CONTROLLER

58

CONNECTOR
SELECTION
LOGIC

64

60

62

DEVICE A

70

DEVICE B

72

LOGIC

74

EP 0 351 961 A2

MUX

_68_

TO/FROM
SYSTEM DE-
VICES

FROM DECODER 67

MUX

_66_

TO/FROM
CONNECTOR 60

64

DECODER

_67_

FIG. 3